# EUROPÄISCHE PATENTSCHRIFT

(11) **EP 2 002 526 B1**
(45) Veröffentlichungstag und Bekanntmachung des Hinweises auf die Patenterteilung: **09.03.2011**
(21) Anmeldenummer: 07704199.4
(22) Anmeldetag: 29.01.2007
(51) Int. Cl.: H02K 1/32, H02K 9/08

(54) **ELEKTRISCHE MASCHINE**
ELECTRICAL MACHINE
MACHINE ELECTRIQUE

(30) Priorität: 31.03.2006 DE 102006015064
(43) Veröffentlichungstag der Anmeldung: 17.12.2008
(73) Patentinhaber: SIEMENS AKTIENGESELLSCHAFT, 80333 München (DE)
(72) Erfinder: WEISS, Sebastian, 90513 Zirndorf (DE)
(86) Internationale Anmeldenummer: PCT/EP2007/050845
(87) Internationale Veröffentlichungsnummer: WO 2007/113024

(56) Entgegenhaltungen:
- DE-A1- 4 242 132
- DE-A1- 19 908 246
- US-A- 2 043 655

## Beschreibung

Die Erfindung betrifft eine elektrische Maschine mit einem Stator und einem Rotor, wobei der Rotor mehrere axial angeordnete Kühlkanäle und eine erste und eine zweite Stirnseite aufweist, und an jeder Stirnseite eine Lüftereinheit angeordnet ist, die zumindest aus zwei Lüftersegmenten besteht, wobei ein Lüftersegment jeweils einem Kühlkanal zugeordnet ist und abwechselnd an der ersten und an der zweiten Stirnseite angeordnet sind.

Bei elektrischen Maschinen entsteht im Betrieb Verlustwärme, die entsprechend abgeführt werden muss. Bekannt ist es, elektrische Maschinen, insbesondere geschlossener Bauart, mit Innenkühlkreisläufen auszustatten, die für eine entsprechende Kühlung sorgen, indem die Temperaturunterschiede im Innenraum der Maschine ausgeglichen werden.

Aus der DE 42 42 132 A1 ist eine geschlossene elektrische Maschine bekannt, bei der auf beiden Stirnseiten ihres Läufers jeweils ein Innenlüfter auf der Läuferwelle angeordnet ist und im Läuferblechpaket sich über dessen volle axiale Länge erstreckende Läuferkühlkanäle vorgesehen sind. Die Läuferkühlkanäle werden entweder von der Antriebsseite zur Abtriebsseite oder umgekehrt durchströmt, d.h. die Durchströmung erfolgt in gegensetzlichen Richtungen. Die Innenlüfter sind als einteilige Radiallüfter ausgebildet und sind direkt an der Läuferwelle angeordnet.

Aus der DE 616 902 ist eine Kühlanordnung für Läufer völlig geschlossener elektrischen Maschinen bekannt, bei der der Läufer durch abwechselnd in verschiedener Richtung durch axiale Kanäle geführte, von Lüftern an den Stirnseiten des Läufers bewegte umlaufende Luftströme gekühlt wird, wobei an beiden Stirnseiten der Maschine Lüfter angeordnet sind, die in ihrem Nabenteil mit Kanälen versehen sind, die zur Führung der Luftströme dienen.

Nachteilig dabei ist, dass die Lüfter nur für elektrische Maschine einer bestimmten Baugröße verwendet werden können, da sie einteilig ausgebildet sind. Für elektrische Maschinen anderer Baugrößen müssen entsprechend andere Lüfter eingesetzt werden.

Aus der DE 470 020 ist eine Kühlanordnung für Läufer völlig geschlossener Bauart bekannt, bei der die Kühlluft von Flügeln, die an den Stirnflächen des Läufers angebracht sind, durch axiale Kanäle im Läufer von der Antriebs- zur Abtriebsseite bzw. umgekehrt gesaugt wird.

Aus der DE 199 08 246 A1 ist eine oberflächengekühlte rotierende elektrische Maschine bekannt, wobei ein Läufer Läuferkanäle aufweist, wobei ein Teil der Läuferkanäle auf einer Seite des Läufers mit einem Radialgebläse verbunden sind. Das Radialgebläse ist so ausgebildet, dass jeder zweite Läuferkanal einen aufgesetzten Rohrstutzen besitzt, der bei Drehbewegung des Läufers einen saugenden Kühlmitteltransport bewirkt.

Der Erfindung liegt die Aufgabe zugrunde, eine gattungsgemäße elektrische Maschine derart weiterzubilden, dass die Lüfter zur Innenkühlung für elektrische Maschinen verschiedener Baugrößen eingesetzt werden können.

Die Aufgabe wird durch die Merkmale des Patentanspruchs 1 gelöst. Vorteilhafte Weiterbildungen sind den Unteransprüchen zu entnehmen.

Die erfindungsgemäße elektrische Maschine weist einen Stator und einen Rotor mit mehreren axial angeordneten Kühlkanälen auf. An den beiden Stirnseiten des Rotors ist jeweils eine Lüftereinheit angeordnet, die zumindest aus zwei Lüftersegmenten besteht, wobei ein Lüftersegment jeweils einem Kühlkanal zugeordnet ist. Die Lüftersegmente sind dabei abwechselnd an den beiden Stirnseiten angeordnet, so dass die Lüftersegmente jeweils einer Stirnseite jedem zweiten Kühlkanal zugeordnet sind. Das Lüftersegment weist einen Luftleitkanal und zwei Luftleitwände auf, wobei sich an zwei Seiten des Luftleitkanals die Luftleitwände erstrecken und die Luftleitwände zweier benachbarter Lüftersegmente sich zumindest abschnittsweise überlappen oder aneinander anschließen.

Die Lüftereinheit besteht zumindest aus zwei Lüftersegmenten, d.h. es wird eine funktionsfähige Lüftereinheit durch mehrere Lüftersegmente gebildet. Ein Lüftersegment ist jeweils einem Kühlkanal zugeordnet und abwechselnd an der ersten und an der zweiten Stirnseite angeordnet, so dass die Lüftersegmente jeweils einer Stirnseite an jedem zweiten Kühlkanal angeordnet sind. Weist der Rotor eine Anzahl von eins bis n (1-n) Kühlkanälen auf, so sind die Lüftersegmente an der ersten Stirnseite jeweils an den Kühlkanälen ungerader Zahl und die Lüftersegmente an der zweiten Stirnseite entsprechend den Kühlkanälen gerader Zahl angeordnet. Weist der Rotor beispielsweise sechs Kühlkanäle auf, so sind die Lüftersegmente der ersten Stirnseite am ersten, dritten und fünften Kühlkanal angeordnet und die Lüftersegmente der zweiten Stirnseite am zweiten, vierten und sechsten Kühlkanal angeordnet. Somit entsteht eine versetzte Anordnung der Lüftersegmente an den beiden Stirnseiten. Dadurch werden die Kühlkanäle entsprechend entgegengesetzt durchströmt, entweder von der Antriebszur Abtriebsseite oder umgekehrt.

Das Lüftersegment besteht aus einem Luftleitkanal und **zwei Luftleitwänden.** Im Luftleitkanal wird das Kühlmedium, beispielsweise Luft, transportiert. Daher entspricht der Querschnitt des Kühlkanals senkrecht zur Rotorachse im wesentlichen dem Querschnitt des Luftleitkanals, da die Luft durch die Kühlkanäle angesaugt und anschließend durch den Luftleitkanal des Lüftersegments abgegeben wird. Das Lüftersegment kann auch mehrere, beispielsweise zwei, Luftleitkanäle aufweisen.

Die Luftleitwände sind so ausgebildet, dass die Luftleitwände zweier benachbarter Lüftersegmente sich zumindest abschnittsweise aneinander anschließen oder aneinander überlappen. Durch diese zumindest abschnittsweise bestehende Überlappung oder Anschließung der Luftleitwände wird der Luftstrom definiert wie folgt in der elektrischen Maschine geführt: Die Luft wird zunächst von der Lüftereinheit, bestehend aus beispielsweise drei Lüftersegmenten, der ersten Stirnseite angesaugt und strömt durch die zugehörigen Kühlkanäle, bei insgesamt sechs Kühlkanälen entsprechend durch den ersten, dritten und fünften Kühlkanal. Die Luft tritt dann aus den Luftleitkanälen der drei Lüftersegmente aus, strömt über den Wickelkopf zur Gehäusewand der elektrischen Maschine und anschließend zurück in den zweiten, vierten und sechsten Kühlkanal des Rotors, da die Luft nun von der Lüftereinheit der zweiten Stirnseite angesaugt wird.

Die Luftleit**wände sind** in vorteilhafter Weise am Luftleitkanal parallel zur ersten oder zweiten Stirnseite angeordnet. Eine parallele Anordnung der Luftleitwand ergibt sich dann, wenn die Lüftereinheit beispielsweise als Radiallüfter ausgebildet ist. In diesem Fall wird die abzugebende Luft im Wesentlichen um 90° umgelenkt. Die Lüftereinheit kann aber auch als Diagonallüfter ausgebildet sein, wobei die Luftleitwand nicht parallel zur ersten oder zweiten Stirnseite angeordnet wäre. Die Luftleitwand könnte dann beispielsweise so angeordnet sein, dass zwischen Luftleitwand und erster oder zweiter Stirnseite ein Winkel von im Wesentlichen 45° ist. Durch die Anbringung der Luftleitwand wird der Luftstrom definiert innerhalb der elektrischen Maschine geführt, so dass eine gleichmäßige Kühlung erfolgt.

Vorzugsweise ist die zweite Luftleitwand näher zur ersten oder zweiten Stirnseite des Rotors angeordnet. Die versetzte Anordnung der Luftleitwände ermöglicht es, dass sich die Luftleitwände benachbarter Lüftersegmente überlappen. Dadurch entsteht eine gemeinsame stabile Luftleitwand der benachbarten Lüftersegmente, wodurch der Luftstrom definiert in die entsprechenden Kühlkanäle des Rotors geleitet wird. So schiebt sich beispielsweise die zweite Luftleitwand des ersten Lüftersegments unter die erste Luftleitwand des zweiten Lüftersegments, da die Luftleitwände beide versetzt parallel zur Stirnseite des Rotors angeordnet sind.

Vorzugsweise ist das Lüftersegment aus Aluminiumguss hergestellt. Dies erlaubt eine kostengünstige Herstellung, insbesondere bei hohen Stückzahlen. Das Lüftersegment kann aber auch aus anderen Materialien hergestellt sein, wie beispielsweise Kunststoff, Stahl oder andere Metalle.

Vorzugsweise ist das Lüftersegment an der Stirnseite des Rotors mit einer Schraube befestigt. Bei einer Montage durch Verschrauben kann beispielsweise eine Wuchtung des Rotors an den Schrauben durch das Anbringen von Unterlegscheiben erfolgen. Es sind natürlich auch andere Befestigungsarten möglich. Beispielsweise kann ein Lüftersegment mittels einer Schnappverbindung mit den Kühlkanälen des Rotors befestigt werden. Bei Schnappverbindungen wird die Elastizität der Werkstoffe, wie beispielsweise Kunststoffe oder Federstahl, für die Verbindung zweier Bauteile ausgenutzt. Am Lüftersegment sind beispielsweise Haken angebracht, die sich dann, vorzugsweise lösbar, in den Kühlkanälen verhaken. Im Reparaturfall kann dann ein Lüftersegment einfach ausgetauscht werden.

Vorzugweise ist die Lüftereinheit als Radial- oder Diagonallüfter ausgebildet. Die Luft wird parallel bzw. axial zur Rotorachse durch die Kühlkanäle angesaugt, da bei der Drehung des Rotors in den Kühlkanälen ein Unterdruck entsteht. Dadurch wird die Luft in die Kühlkanäle eingesaugt und der Lüftereinheit, also den Lüftersegmenten, zugeführt. Anschließend wird die Luft entsprechend umgelenkt und radial bzw. diagonal abgegeben.

Die Ausführung der Lüftereinheit in einzelne Lüftersegmente ermöglicht es, dass die Lüftersegmente für elektrische Maschinen verschiedener Baugrößen eingesetzt werden können. Dies wird im Wesentlichen durch die Größe der Luftleitwände der Lüftersegmente bestimmt. Ein bestimmter Durchmesserbereich des Rotors bzw. der Luftleitkanäle kann mit den baugleichen Lüftersegmenten aufgrund der Variabilität bei der Überlappung der Luftleitwände abgedeckt werden. Handelt es sich beispielsweise um elektrische Maschinen mit kleinerem Rotordurchmesser ist die Überlappung der Luftleitwände größer als bei Maschinen mit größerem Rotordurchmesser.

Weiterhin wird durch den Einsatz von Lüftersegmenten anstatt von einteiligen Lüftern eine Variantenreduzierung von Lüftern erreicht. Auch ist keine zusätzliche mechanische Bearbeitung der Lüftersegmente notwendig. Bei konventionellen Lüftern ist oft eine Drehbearbeitung bzgl. des Nabendurchmessers, der Länge oder des Außendurchmessers notwendig.

In der nachfolgenden Beschreibung werden weitere Merkmale und Einzelheiten der Erfindung in Zusammenhang mit den beigefügten Zeichnungen anhand von Ausführungsbeispielen näher erläutert. Dabei sind in einzelnen Varianten beschriebene Merkmale und Zusammenhänge grundsätzlich auf alle Ausführungsbeispiele übertragbar. In den Zeichnungen zeigen:
- FIG 1: eine erfindungsgemäße elektrische Maschine in einer Längsschnittdarstellung;
- FIG 2: eine erfindungsgemäße elektrische Maschine in einer Querschnittdarstellung;
- FIG 3: ein Lüftersegment in einer ersten Ausführungsform;
- FIG 4: ein Lüftersegment in einer zweiten Ausführungsform;
- FIG 5: ein Lüftersegment gemäß FIG 4 in einer Draufsicht.

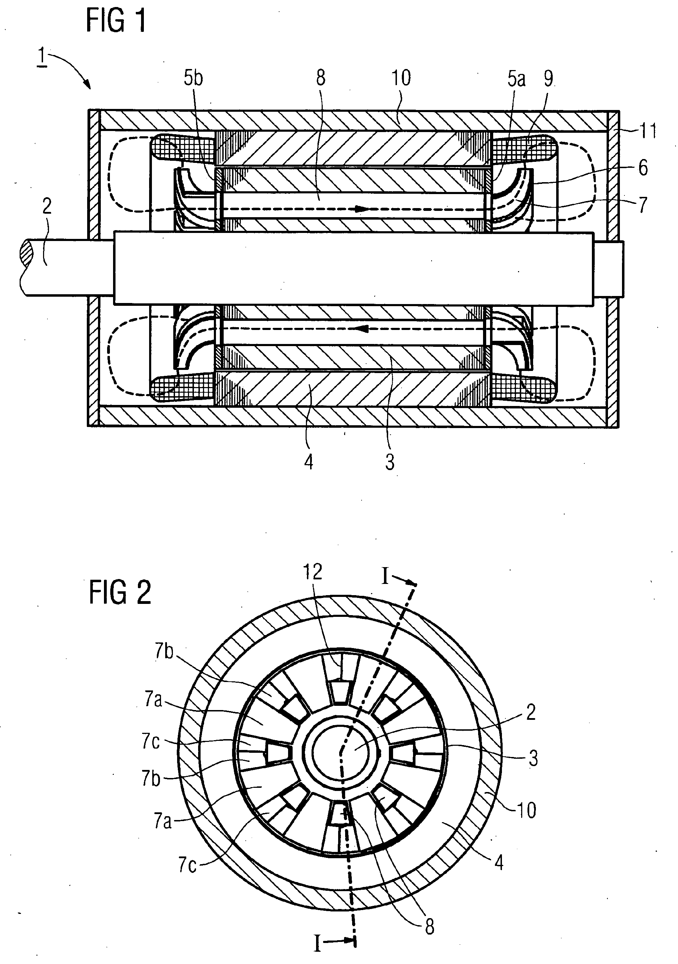

FIG 1 zeigt eine erfindungsgemäße elektrische Maschine 1 in einer Längsschnittdarstellung. Die elektrische Maschine 1 weist einen Stator 4 mit Wickelköpfen 9 und einen Rotor 3 auf, der an der Rotorachse 2 angeordnet ist. An den beiden Stirnseiten 5a, 5b des Rotors 3 ist jeweils die Lüftereinheit 6 angeordnet, die aus mehreren Lüftersegmenten 7 besteht. Weiterhin weist der Rotor 3 mehrere axiale Kühlkanäle 8 auf. Die Lüftersegmente 7 sind abwechselnd an den beiden Stirnseiten 5a, 5b angeordnet. Das Kühlmedium, insbesondere Luft, wird von den an den beiden Stirnseiten 5a, 5b gebildeten Lüftereinheiten 6 angesaugt und strömt durch die Kühlkanäle 8 und die Lüftersegmente 7 über die Wickelköpfe 9 zur Innenwand des Gehäuses 10 bzw. des Lagerschildes 11 zurück in die Kühlkanäle 8. Die Lüftereinheit 6 besteht aus mehreren Lüftersegmenten 7, wodurch ein funktionsfähiger Radiallüfter gebildet wird.

FIG 2 zeigt eine erfindungsgemäße elektrische Maschine 1 in einer Querschnittdarstellung mit Blick auf die erste Rotorstirnseite 5a. Gut zu erkennen sind die Kühlkanäle 8 des Rotors 3, wobei insgesamt 16 Kühlkanäle 8 vorhanden sind. Jedem Kühlkanal 8 ist ein Lüftersegment 7 zugeordnet, wodurch sich ergibt, dass an jeder Stirnseite 5a, 5b acht Lüftersegmente angeordnet sind. Weiterhin sind der Luftleitkanal 7a sowie die Luftleitwände 7b und 7c dargestellt. Die Luftleitwände 7b und 7c sind parallel zur gezeigten Stirnseite 5a angeordnet. Wie bereits näher ausgeführt, sind die Luftleitwände 7b und 7c versetzt angeordnet, derart, dass die zweite Luftleitwand 7c näher zur Stirnseite 5a angeordnet ist. Dies führt zur Überlappung 12, da sich die zweite Luftleitwand 7c eines Lüftsegments 7 unter die erste Luftleitwand 7b des benachbarten Lüftersegments 7 schiebt. Natürlich kann sich auch eine erste Luftleitwand unter die zweite Luftleitwand schieben. Es kann auch möglich sein, dass sich die Luftleitwände überhaupt nicht überlappen, sondern nur aneinander anschließen. Weiterhin zeigt FIG 2, dass die Luftleitwände 7b und 7c so ausgebildet sind, dass die Luftleitkanäle 8, die zur Rückführung der Luft dienen, entsprechend frei bleiben, damit die Luft dort, angesaugt von der nicht gezeigten Lüftereinheit der gegenüberliegenden Stirnseite des Rotors 3, freien Zugang hat.

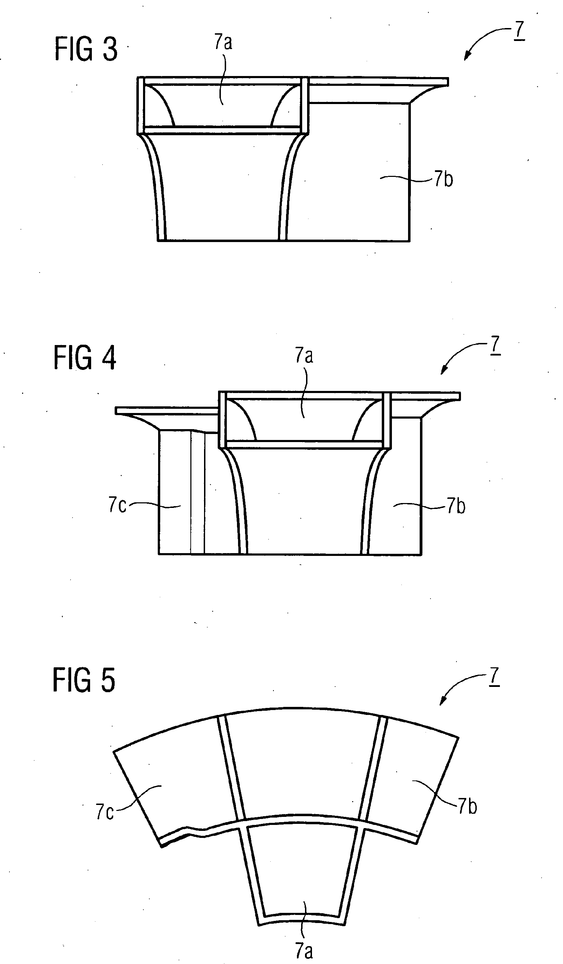

FIG 3 zeigt ein Lüftersegment 7 in einer ersten Ausführungsform. Das Lüftersegment 7 besteht aus einem Luftleitkanal 7a und einer Luftleitwand 7b. In dem Luftleitkanal 7a wird die Luft transportiert bzw. gesaugt. Die Luftleitwand 7b ist am Luftleitkanal 7a parallel zu einer der zwei Stirnseiten 5a oder 5b, hier nicht dargestellt, angeordnet. Die Luftleitwand ist so ausgebildet, dass sie an ein nicht gezeigtes benachbartes Lüftersegment zumindest abschnittsweise anschließt oder überlappt.

FIG 4 zeigt ein Lüftersegment 7 in einer zweiten Ausführungsform. Das Lüftersegment 7 weist den Luftleitkanal 7a und zwei Luftleitwände 7b und 7c auf, die sich an gegenüberliegenden Seiten des Luftleitkanals 7a erstrecken. Besonders gut ist in FIG 4 zu erkennen, dass die Luftleitwände 7b und 7c zueinander versetzt angeordnet sind, wobei die Luftleitwand 7c näher zur nicht gezeigten Stirnseite des Rotors hin angeordnet ist. So wird bei der Montage der Lüftersegmente 7 eine Überlappung ermöglicht.

FIG 5 zeigt ein Lüftersegment 7 gemäß Fig. 4 in einer Draufsicht. Wie aus FIG 5 ersichtlich, erstrecken sich die Luftleitwände 7b und 7c nicht über den gesamten Luftleitkanal 7a, sondern nur soweit, dass die nicht gezeigten Kühlkanäle zur Rückführung der Luft frei bleiben.

## Patentansprüche

1. Elektrische Maschine (1) mit einem Stator (4) und einem Rotor (3), wobei der Rotor (3) mehrere axial angeordnete Kühlkanäle (8) und eine erste (5a) und eine zweite Stirnseite (5b) aufweist, und an jeder Stirnseite eine Lüftereinheit (6) angeordnet ist, die zumindest aus zwei Lüftersegmenten (7) besteht, wobei jeweils ein Lüftersegment (7) einem Kühlkanal (8) zugeordnet ist und die Lüftersegmenten (7) abwechselnd an der ersten (5a) und an der zweiten Stirnseite (5b) angeordnet sind, **dadurch gekennzeichnet, dass** das Lüftersegment (7) zumindest einen Luftleitkanal (7a) und zwei Luftleitwände (7b,7c) aufweist, wobei sich die Luftleitwände (7b,7c) an zwei Seiten des Luftleitkanals (7a) erstrecken und die Luftleitwände (7b,7c) zweier benachbarter Lüftersegmente (7) sich zumindest abschnittsweise überlappen oder aneinander anschließen.

2. Elektrische Maschine (1) nach Anspruch 1, **dadurch gekennzeichnet, dass** die Luftleitwände (7b,7c) am Luftleitkanal (7a) parallel zur ersten oder zweiten Stirnseite (5a,5b) des Rotors angeordnet sind.

3. Elektrische Maschine (1) nach Anspruch 1 oder 2, **dadurch gekennzeichnet, dass** die zweite Luftleitwand (7c) näher zur ersten oder zweiten Stirnseite (5a,5b) angeordnet ist.

4. Elektrische Maschine (1) nach einem der Ansprüche 1 bis 3, **dadurch gekennzeichnet, dass** das Lüftersegment (7) aus Aluminiumguss hergestellt ist.

5. Elektrische Maschine (1) nach einem der Ansprüche 1 bis 4, **dadurch gekennzeichnet, dass** das Lüftersegment (7) an der Stirnseite (5) des Rotors (3) mit einer Schraube befestigt ist.

6. Elektrische Maschine (1) nach einem der Ansprüche 1 bis 5, **dadurch gekennzeichnet, dass** die Lüftereinheit (6) als Radial- oder Diagonallüfter ausgebildet ist.

## Claims

1. Electrical machine (1) having a stator (4) and a rotor (3), with the rotor (3) having a plurality of axially arranged cooling channels (8) and a first (5a) and a second (5b) end face, and with a fan unit (6) being arranged on each end face and comprising at least two fan segments (7), with in each case one fan segment (7) being associated with one cooling channel (8) and the fan segments (7) being arranged alternately on the first end face (5a) and on the second end face (5b), **characterized in that** the fan segment (7) has at least one air guide channel (7a) and two air guide walls (7b, 7c), with the air guide walls (7b, 7c) extending on two sides of the air guide channel (7a) and with the air guide walls (7b, 7c) of two adjacent fan segments (7) overlapping or being connected to one another, at least in places.

2. Electrical machine (1) according to Claim 1, **characterized in that** the air guide walls (7b, 7c) on the air guide channel (7a) are arranged parallel to the first or second end face (5a, 5b) of the rotor.

3. Electrical machine (1) according to Claim 1 or 2, **characterized in that** the second air guide wall (7c) is arranged closer to the first or second end face (5a, 5b).

4. Electrical machine (1) according to one of Claims 1 to 3, **characterized in that** the fan segment (7) is produced from cast aluminum.

5. Electrical machine (1) according to one of Claims 1 to 4, **characterized in that** the fan segment (7) is attached by a screw to the end face (5) of the rotor (3).

6. Electrical machine (1) according to one of Claims 1 to 5, **characterized in that** the fan unit (6) is in the form of a radial or diagonal fan.

## Revendications

1. Machine ( 1 ) électrique comprenant un stator ( 4 ) et un rotor ( 3 ), le rotor ( 3 ) ayant plusieurs canaux ( 8 ) de refroidissement disposés axialement et un premier côté ( 5a ) frontal et un deuxième côté ( 5b ) frontal, et sur chaque côté frontal est disposé un groupe ( 6 ) de ventilateurs constitué au moins de deux segments ( 7 ) de ventilateur, respectivement un segment ( 7 ) de ventilateur étant associé à un canal ( 8 ) de refroidissement et les segments ( 7 ) de ventilateur étant disposés en alternance sur le premier côté ( 5a ) frontal et sur le deuxième côté ( 5b ) frontal, **caractérisée en ce que** le segment ( 7 ) de ventilateur a au moins un canal ( 7 ) de conduite de l'air et deux parois ( 7b, 7c ) de conduite de l'air, les parois (7b, 7c) de conduite de l'air s'étendant sur les deux côtés du canal ( 7a ) de conduite de l'air et les parois ( 7b, 7c ) de conduite de l'air de deux segments ( 7 ) de ventilateur voisins se chevauchant ou se raccordant l'un à l'autre au moins par tronçon.

2. Machine ( 1 ) électrique suivant la revendication 1, **caractérisée en ce que** les parois ( 7b, 7c ) de conduite de l'air du canal ( 7a) de conduite de l'air sont disposées parallèlement au premier côté ( 5a ) frontal ou au deuxième côté ( 5b ) frontal du rotor.

3. Machine ( 1 ) électrique suivant la revendication 1 ou 2, **caractérisée en ce que** la deuxième paroi ( 7c ) de conduite de l'air est disposée près du premier côté ( 5a ) frontal ou du deuxième côté ( 5b ) frontal.

4. Machine ( 1 ) électrique suivant l'une des revendications 1 à 3, **caractérisée en ce que** le segment ( 7 ) de ventilateur est en fonte d'aluminium.

5. Machine ( 1 ) électrique suivant l'une des revendications précédentes 1 à 4, **caractérisée en ce que** le segment ( 7 ) de ventilateur est fixé au côté ( 5 ) frontal du rotor ( 3 ) par une vis.

6. Machine ( 1 ) électrique suivant l'une des revendications précédentes 1 à 5, **caractérisée en ce que** le groupe ( 6 ) de ventilateurs est constitué en ventilateur radial ou en ventilateur diagonal.
